(19) Europäisches Patentamt
European Patent Office
Office européen des brevets

(11) **EP 3 887 683 B1**

(12) # EUROPÄISCHE PATENTSCHRIFT

(45) Veröffentlichungstag und Bekanntmachung des Hinweises auf die Patenterteilung:
**07.02.2024 Patentblatt 2024/06**

(21) Anmeldenummer: **19765715.8**

(22) Anmeldetag: **06.09.2019**

(51) Internationale Patentklassifikation (IPC):
*F04D 17/16* *(2006.01)*    *F04D 19/00* *(2006.01)*
*F04D 27/00* *(2006.01)*

(52) Gemeinsame Patentklassifikation (CPC):
**F04D 27/001; F04D 17/16; F04D 19/002; F04D 27/004;** Y02B 30/70

(86) Internationale Anmeldenummer:
**PCT/EP2019/073870**

(87) Internationale Veröffentlichungsnummer:
**WO 2020/147987 (23.07.2020 Gazette 2020/30)**

(54) **VOLUMENSTROMBESTIMMUNG**

DETERMINATION OF VOLUME FLOW RATE

DÉTERMINATION DU DÉBIT VOLUMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.01.2019 DE 102019101022**

(43) Veröffentlichungstag der Anmeldung:
**06.10.2021 Patentblatt 2021/40**

(73) Patentinhaber: **ebm-papst Mulfingen GmbH & Co. KG**
**74673 Mulfingen (DE)**

(72) Erfinder:
• **WYSTUP, Ralph**
**74653 Künzelsau (DE)**

• **ECCARIUS, Michael**
**74673 Mulfingen-Jagstberg (DE)**
• **MOHR, Hendrik**
**74549 Wolpertshausen (DE)**

(74) Vertreter: **Staeger & Sperling Partnerschaftsgesellschaft mbB Sonnenstraße 19 80331 München (DE)**

(56) Entgegenhaltungen:
WO-A1-2018/226973    US-A1- 2004 219 875
US-A1- 2012 171 050    US-A1- 2015 037 169

EP 3 887 683 B1

**Beschreibung**

Die Erfindung betrifft eine Volumenstromerfassungsvorrichtung zur Bestimmung des Volumenstroms eines Ventilators ohne einen Volumenstromsensor zu benötigen.

Zur Volumenstromregelung von Ventilatoren ist es erforderlich den Volumenstrom, den der Ventilator erzeugt, zu kennen. Die Volumenstromregelung von Ventilatoren ist zum Beispiel dann wichtig, wenn in einem klimatisierten Raum, ein konstanter Volumenstrom an Luft zugeführt werden muss. Weiterhin werden Volumenstromregelungen für die Steuerung eines konstanten Volumenstroms bzw. eines konstanten Überdruckes eines Raumes bei Reinsträumen, beispielsweise bei der Halbleiterherstellung, verwendet.

Aus dem Stand der Technik ist es bekannt, die Regelung des Volumenstromes, der von einem Gebläse abgegeben wird, auf Basis des gemessenen Volumenstroms vorzunehmen. Dabei ist es möglich, im Rahmen sehr aufwendiger Systemlösungen die Drehzahl des Gebläsemotors über Frequenzumrichter zu verändern oder mittels einer Veränderung der Schaufelstellung die Förderleistung des Gebläses oder Ventilators und damit den Volumenstrom zu beeinflussen, sofern der Soll-Volumenstrom vom Ist-Volumenstrom abweicht.

Die bekannten Möglichkeiten zur Volumenstromregelung verwenden typischerweise einen Sensor, der im Strömungskanal angeordnet ist, in Verbindung mit einer Volumenstrom-Messeinrichtung.

Nachteilig sind dabei die zusätzlichen Kosten für die Messeinrichtung und den Sensor, der Einbauaufwand und auch die negativen Effekte auf den Luftstrom, wie zum Beispiel die Erhöhung des Strömungswiderstands und auftretende Verwirbelungen.

Volumenstromerfassungseinrichtungen sind zudem beispielsweise aus den Dokumenten US 2012/171050 A1 und US 2015/037169 A1 bekannt.

Der Erfindung liegt deshalb die Aufgabe zugrunde, vorbesagte Nachteile zu umgehen und eine einfachere und kostengünstigere Lösung zur Bestimmung des Volumenstroms bereit zu stellen, insbesondere unter der Prämisse auf störende Messeinrichtungen zu verzichten.

Diese Aufgabe wird durch die Merkmalskombination gemäß Anspruch 1 gelöst.

Ein Grundgedanke der vorliegenden Erfindung besteht darin, dass ein Simulationsmodell dazu verwendet wird, mittels eines Mikrocontrollers aus der Drehzahl n des Motors des Lüfters bzw. Ventilators den Volumenstrom zu ermitteln, wobei die Motordrehzahl n als Eingangsgröße für Berechnungen verwendet wird, die Bestimmung von dem Volumenstrom und der Druckdifferenz aus dem Modell generiert wird, dann ein aus Messungen ermittelter Korrekturfaktor zur Angleichung von Messergebnis und Simulation verwendet wird, um den Volumenstrom mit einer vorgegebenen Genauigkeit zu bestimmen.

Dabei umfasst die Simulation die folgenden vier Komponenten: Eine ideale Druckerzeugung, die Berechnung der auftretenden Verluste, die Berechnung des Volumenstroms in Abhängigkeit von Druck und dem Anlagenwiderstand (der als bekannt vorausgesetzt wird) und der Korrektur der Ergebnisse. Erfindungsgemäß wird demnach eine Volumenstromerfassungsvorrichtung eines Ventilators mit einem Motor umfassend einen Drehzahlregler und wenigstens einen Mikrocontroller vorgeschlagen, wobei an einem Eingang des Mikrocontrollers die Drehzahl n des Motors als Eingangsgröße in Form eines digitalen Signals eingegeben wird, um mittels eines in einem Speicher des Mikrocontrollers hinterlegten Simulationsmodells "SM" die vom Laufrad bei dieser Drehzahl erzeugte Druckdifferenz $\Delta p$ und den Volumenstrom $\Delta V/\Delta t$ an einem Ort x in einem Strömungskanal des Ventilators in einer bestimmten Einbausituation einer Anlage zu bestimmen und insbesondere bei einer Abweichung von einem Soll-Volumenstrom $\Delta V_{Soll}/\Delta t$ die Drehzahl n des Motors entsprechend über den Drehzahlregler (vorzugsweise iterativ) anzupassen. In einer bevorzugten Ausgestaltung der Erfindung ist vorgesehen, dass das Simulationsmodell "SM" für die Ermittlung der Druckdifferenz $\Delta p$ und des Volumenstroms $\Delta V/\Delta t$ ein Laufradmodell "LM" für das Laufrad umfasst, bei dem wenigstens die Kreisfrequenz w des Motors als Eingangsgröße verendet wird. Das Laufradmodell simuliert dabei das Laufrad des Ventilators in einer Mikrocontroller-gesteuerten Schaltungsanordnung.

Bei einem Vergleich der Simulationsergebnisse mit den Messungen an einem Ventilator zeigt sich jedoch mit zunehmendem Volumenstrom eine zunehmende Abweichung, da dann die auftretenden Verluste entsprechend stärker zu Buche schlagen.

Erfindungsgemäß wird neben der aus dem Simulationsmodell ermittelten Druckdifferenz $\Delta p$ ferner ein Korrekturfaktor K für Strömungsverluste $\Delta V_{Ver\text{-}lust}/\Delta t$ bei der Volumenstrombestimmung des Volumenstroms $\Delta V/\Delta t$ verwendet, mit dem eine Abweichung der tatsächlichen Strömungsverhältnisse gegenüber der idealen Ventilatorkennlinie, das heißt den Strömungsverhältnissen ohne Vorhandensein von Strömungsverlusten des Ventilators, korrigiert wird.

In einer weiteren vorteilhaften Ausgestaltung der Erfindung ist vorgesehen, dass der Korrekturfaktor K als ein Druckverlustbeiwert $\zeta_a$ die Verluste wenigstens aus den Reibungsverlusten, den Stoßverlusten und den Spaltverlusten im Strömungskanal, die zu einer Volumenstromabweichung am Ort x der Anlage führen, berücksichtigt.

Aus der im Laufradmodell berechneten Druckdifferenz, also dem "idealen" Druck abzüglich der Druckverluste, wird im Modell der Anlage mit Vorgabe eines Druckverlustbeiwertes $\zeta_a$ der entstehende Volumenstrom berechnet. Die Anlage stellt hierbei den strömungsmechanischen Widerstand, also das Verhältnis zwischen Volumenstrom und Druckdifferenz und die Trägheit der bewegten Luft dar, um ein möglichst genaues Ergebnis zu erzielen.

Weiter vorteilhaft ist es demzufolge, wenn der Korrekturfaktor K als eine Funktion des Druckverlustbeiwertes $\zeta_a$ ($\Delta V/\Delta t$, n) abhängig vom Volumenstrom $\Delta V/\Delta t$ und der Drehzahl n auf Basis einer mit dem Ventilator oder einem Ventilator identischer Bauart durchgeführten Referenzmessung aus dem Quotienten aus der gemessenen Druckdifferenz zur berechneten Druckdifferenz wie folgt bestimmt wurde:

$$K = K(\zeta_a) = (\Delta p_{Soll} / \Delta p_{Mess}).$$

Erfindungsgemäß ist dabei vorgesehen, dass mindestens für den Drehzahlbereich mit Drehzahlen n zwischen 500/min und 1900/min ein Korrekturfaktor K ermittelt wird.

Es ist in einer bevorzugten Ausführung vorgesehen, dass das Laufradmodell demnach so ausgelegt ist, dass der Gesamt-Volumenstrom $\Delta V_{Ges}/\Delta t$ einschließlich der Verluste $\Delta V_{Verlust}/\Delta t$ wie folgt ermittelt wird:

$$\Delta V_{Ges}/\Delta t = \Delta V_{Verlust}/\Delta t + \Delta V/\Delta t.$$

Ein weiterer Aspekt der vorliegenden Erfindung betrifft eine lufttechnische Anlage mit einer wie zuvor beschriebenen Volumenstromerfassungsvorrichtung.

Ein ebenfalls weiterer Aspekt der vorliegenden Erfindung betrifft ein Verfahren zur Volumenstromerfassung eines Ventilators mit einem Motor umfassend einen Drehzahlregler und wenigstens einen Mikrocontroller, mit den folgenden Schritten:

    a. an einem Eingang des Mikrocontrollers wird die Drehzahl n des Motors als Eingangsgröße in Form eines digitalen Signals eingegeben

    b. es wird mittels eines in einem Speicher des Mikrocontrollers hinterlegten Simulationsmodells "SM" die vom Laufrad bei dieser Drehzahl erzeugte Druckdifferenz $\Delta p$ und der Volumenstrom $\Delta V/\Delta t$ an einem Ort x in einem Strömungskanal des Ventilators in einer bestimmten Einbausituation einer Anlage bestimmt und

    c. bei einer Abweichung des ermittelten Ist-Volumenstroms $\Delta V/\Delta t$ von einem Soll-Volumenstrom $\Delta V_{Soll}/\Delta t$ wird die Drehzahl n des Motors entsprechend über den Drehzahlregler angepasst.

In einer vorteilhaften Weiterbildung des Verfahrens ist vorgesehen, dass die angepasste Drehzahl n erneut als Eingangsgröße bei der Durchführung der Schritte a) bis c) verwendet wird, solange, bis die Abweichung des Volumenstroms $\Delta V/\Delta t$ geringer ist, als ein vorgegebener zulässiger Abweichungswert. Es kann auch vorgesehen sein, dass nach einer bestimmten Anzahl an iterativen Korrekturschritten, die Prozedur abgebrochen wird und der so ermittelte Wert für den ermittelten Volumenstrom als ausreichend genau betrachtet wird.

Weiter wird bei der Ermittlung des Volumenstroms $\Delta V/\Delta t$ ein Korrekturwert K berücksichtigt, der zu einem Druckverlustbeiwert $\zeta_a$ abhängig vom Volumenstrom $\Delta V/\Delta t$ und der Drehzahl n korrespondiert und auf Basis einer mit dem Ventilator oder einem Ventilator identischer Bauart durchgeführten Referenzmessung aus dem Quotienten aus der gemessenen Druckdifferenz zur berechneten Druckdifferenz wie folgt bestimmt wurde:

$$K = K(\zeta_a) = (\Delta p_{Soll} / \Delta p_{Mess}).$$

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:

Fig. 1    ein Simulationsmodell in einer Vierpoldarstellung,

Fig. 2    ein Signalflussdiagramm eines Laufradmodells,

Fig. 3    ein Laufradmodell in einer Vierpoldarstellung,

Fig. 4    ein Signalflussdiagramm für eine Anlage,

Fig. 5    eine Graf zur Veranschaulichung der Abweichung zwischen der Messung des Volumenstroms und der Simulation,

Fig. 6    Verlauf der Kurvenschar von Korrekturfunktionen und

Fig. 7    eine Darstellung der Ergebnisse der Anwendung der Korrekturfunktion auf die ermittelten Simulationswerte.

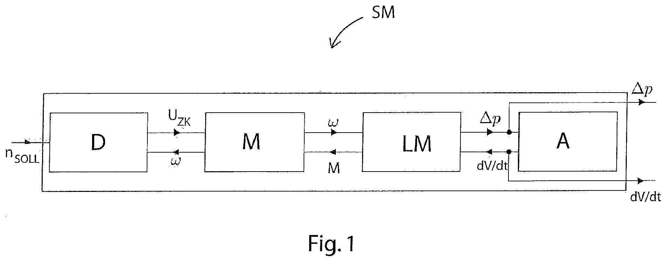

Im Folgenden wird die Erfindung anhand eines Ausführungsbeispiels mit Bezug auf die Figuren 1 bis 7 näher beschrieben, wobei gleiche Bezugszeichen auf gleiche funktionale und/oder strukturelle Merkmale hinweisen.

In der Fig. 1 ist ein Simulationsmodell SM in einer Vierpoldarstellung gezeigt, wobei das Simulationsmodell dabei ein Gesamtmodell mit den Komponenten: Drehzahlregler D eines Ventilators, Motor M des Ventilators, ein Laufradmodell LM für das Laufrad und die Anlage A in der der Ventilator eingebaut ist.

Als Eingangsgröße wird zu Beginn die Soll-Drehzahl $n_{SOLL}$ an den Drehzahlregler D eingegeben, dieser regelt die entsprechende Zwischenkreisspannung $U_{ZK}$ für den Motor M. Die Kreisfrequenz w (als Größe für die Drehzahl des Motors) wird als Eingangsgröße für das Laufradmodell LM des Laufrades verwendet. Daraus wird die erzeugte Druckdifferenz $\Delta p$ und der Volumenstrom $\Delta V/\Delta t$ in der Anlage A ermittelt.

Ergänzend ist gezeigt, dass der ermittelte Volumenstrom $\Delta V/\Delta t$ im Signalpfad auch wieder an das Laufradmodell LM in einem Signal-Regelkreis zurückgeführt wird.

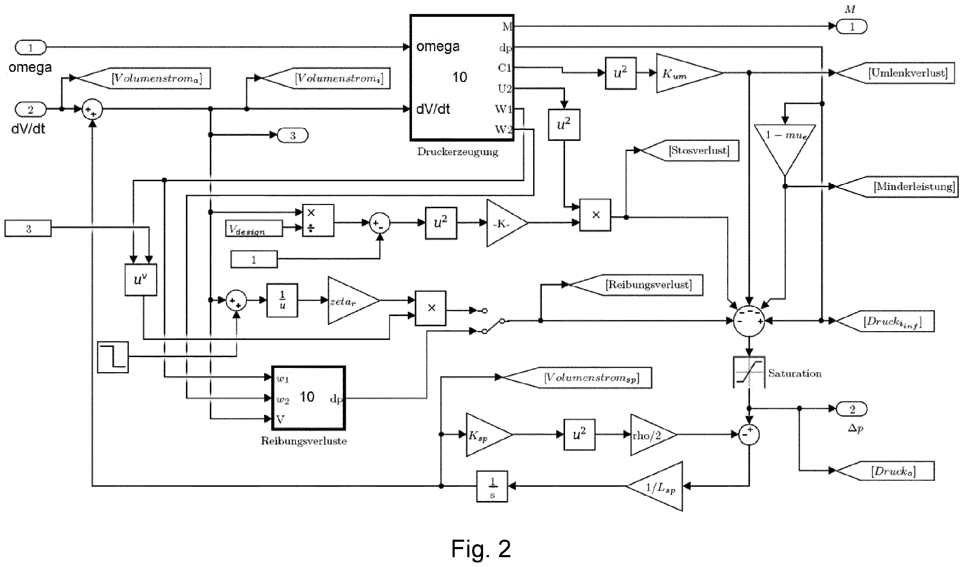

In der Fig. 2 ist ein Signalflussdiagramm eines Laufradmodells LM beispielhaft dargestellt. Hierzu ist ein Mikrocontroller 10 vorgesehen, an dessen Eingang die Drehzahl n des Motors M als Eingangsgröße in Form eines digitalen Signals bzw. der Kreisfrequenz w eingegeben wird, um mittels eines in einem Speicher des Mikrocontrollers 2 hinterlegten Simulationsmodells SM die vom Laufrad bei dieser Drehzahl erzeugte Druckdifferenz $\Delta p$ (am Ausgang 2 im Signalflussdiagramm) in einem Strömungskanal des Ventilators in einer bestimmten Einbausituation einer Anlage A zu bestimmen. Am Eingang 2 wird als weitere Eingangsgröße neben der Kreisfrequenz $\omega$ aus der vom Mikroprozessor 10 ermittelten Druckdifferenz $\Delta p$ der Volumenstrom $\Delta V/\Delta t$ ermittelt und dem Mikroprozessor 10 als Eingangsgröße wieder zugeführt.

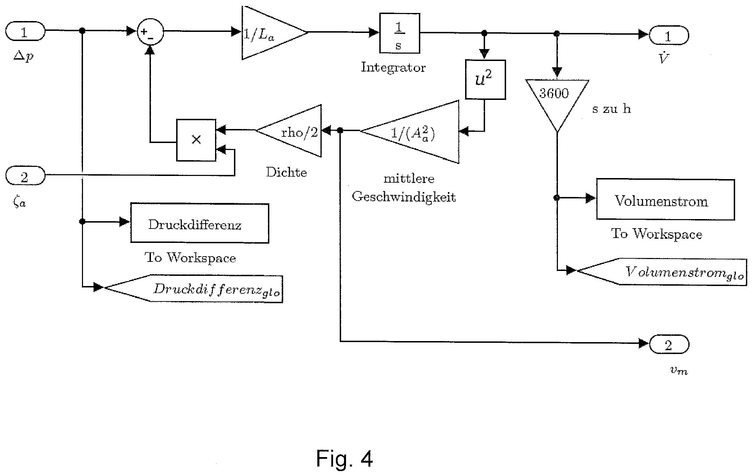

Fig. 4 zeigt ein Signalflussdiagramm für eine Anlage A.

Die Blocksymbole in den Figuren 2 und 4 repräsentieren dabei bekannte und gängige Komponenten, wie Integrierer, Gain, Boolsche und Logische Operatoren, Eingang, Ausgang, etc. wie diese z. B. als MathWorks Simulink Block-Symbole oder MathLab Operatoren bekannt sind, die vorliegend zum Modellieren der konkreten Regelstrecke der gezeigten Ausführungsbeispiele dargestellt sind. Durch das Simulationsmodell lässt sich der konkrete Reglerentwurf verifizieren und automatisch daraus Code erzeugen, weshalb auf die nähere Beschreibung der einzelnen Block-Symbole im Simulationsmodell nicht näher eingegangen wird, da sich deren Wirkung unmittelbar aus der Simulationsmodelldarstellung ergibt.

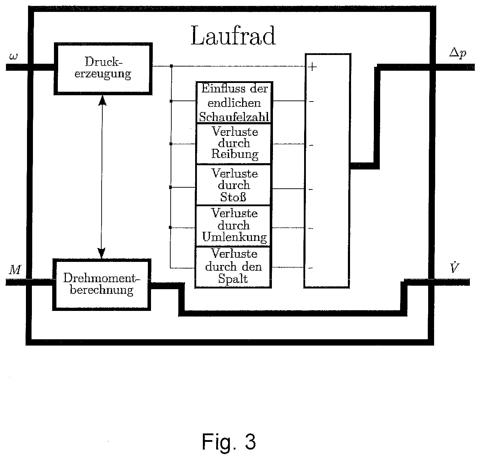

Die Fig. 3 zeigt eine vereinfachte Darstellung des Laufradmodells in einer Vierpoldarstellung mit den Größen an den Polen: Kreisfrequenz w, Druckdifferenz $\Delta p$, Volumenstrom $\Delta V/\Delta t$ und Drehmoment des Laufrads Mv. Beispielhaft sind die Verluste und Einflussgrößen wie Einfluss der endlichen Anzahl von Schaufeln, Verluste durch Rebung, Stoß, Umlenkung und durch den Spalt dargestellt.

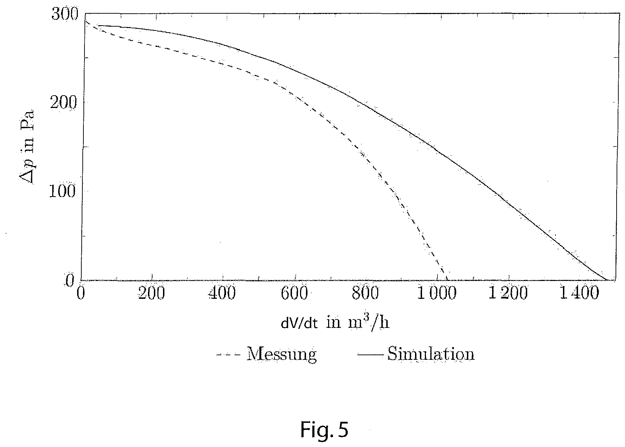

Die Fig. 5 zeigt eine Grafik zur Veranschaulichung der Abweichung zwischen der Messung (die in der Ansicht weiter links verlaufende Kurve der beiden Kurven) des Volumenstroms und der Simulation (die in der Ansicht weiter rechts verlaufende Kurve der beiden Kurven), welche die Abhängigkeit der ermittelten Druckdifferenz $\Delta p$ zum Volumenstrom $\Delta V/\Delta t$ zeigen.

Als Grundlage für die Simulation wurde hierzu ein Ventilator mit der Typbezeichnung R3G250RV8301 der Firma ebm-papst verwendet. Durch Vergleich der Simulationsergebnisse mit den Messungen am Ventilator zeigt sich mit zunehmendem Volumenstrom eine deutliche und zunehmende Abweichung.

Um die Abweichung zwischen Simulation und Messung zu reduzieren, wurde eine Korrekturfunktion (wie weiter oben näher beschrieben) verwendet, welche für jeden Volumenstrom im Drehzahlbereich 500/min < n < 1900/min einen jeweiligen Korrekturfaktor ermittelt.

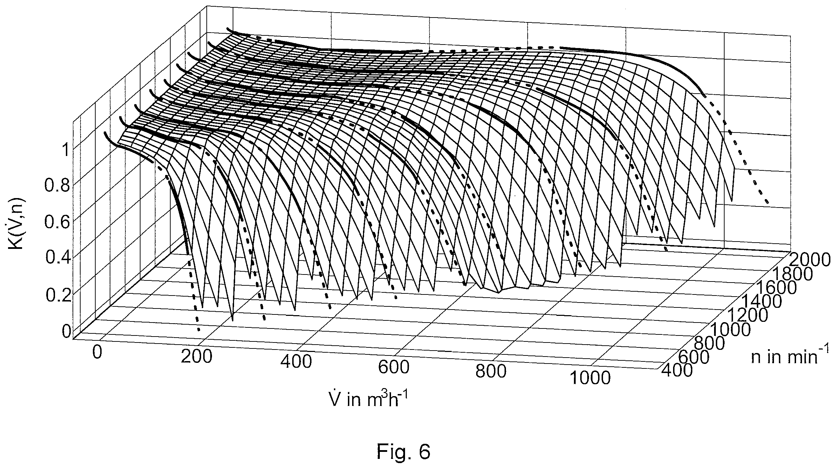

Der Verlauf des Korrekturfaktors bzw. der Kurvenschar des Korrekturfaktors K ist im Diagramm der Figur 6 näher dargestellt, wobei die dritte Koordinatenachse die Drehzahlabhängigkeit des Korrekturfaktors K von der Drehzahl n berücksichtigt.

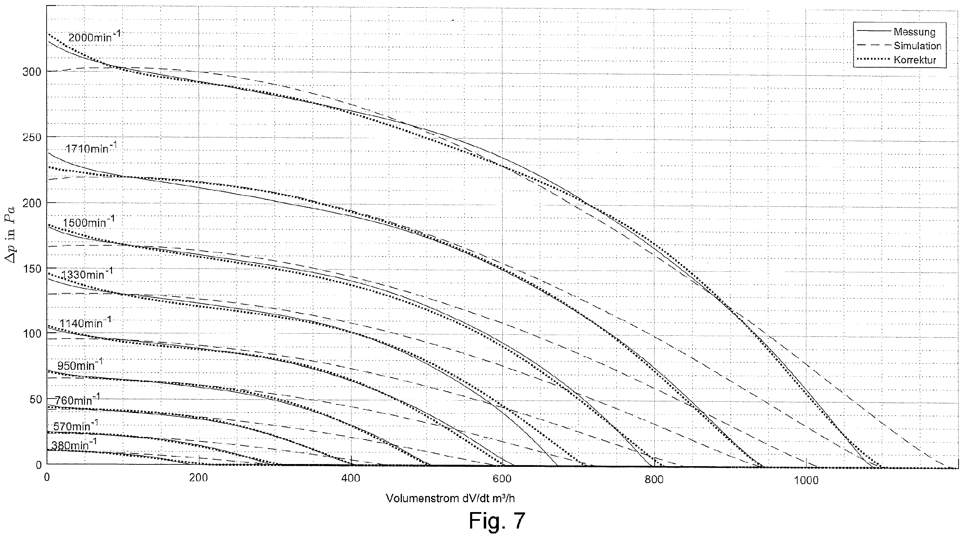

Durch die Anwendung der Korrekturfunktion auf die Simulation werden die Abweichungen der Simulation stark reduziert. Im Diagramm der Figur 7 ist zu erkennen, dass das Ergebnis der Korrektur (schwarz gepunktete Linie) nur noch sehr geringe Abweichungen zur Messung aufweist, wobei die jeweils in die Ordinatenachse weiter hin zu höheren Volumenstrombereichen einmündende Kurve die Simulationskurve darstellt, während die andere Kurve jeweils die Referenzmesskurve ist. Des Weiteren ist festzuhalten, dass die Simualtionsergebnisse den in den Kennlinien der Messung deutlich dargestellten Wendepunkt der Kurve nicht abbilden. Dieser Fehler bei der Ermittlung des Volumenstroms $\Delta V/\Delta t$ ohne Korrekturfaktor wird durch die Korrektur ebenfalls beseitigt.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Der Schutzumfang der Erfindung wird ausschließlich durch die beigefügten Ansprüche definiert.

**Patentansprüche**

1. Volumenstromerfassungsvorrichtung eines Ventilators mit einem Motor (M) umfassend einen Drehzahlregler (D) und wenigstens einen Mikrocontroller (10), wobei an einem Eingang des Mikrocontrollers die Drehzahl n des Motors (M) als Eingangsgröße in Form eines digitalen Signals eingegeben wird, um mittels eines in einem Speicher des Mikrocontrollers (10) hinterlegten Simulationsmodells (SM) die vom Laufrad bei dieser Drehzahl erzeugte Druckdifferenz $\Delta p$ und den Volumenstrom $\Delta V/\Delta t$ an einem Ort x in einem Strömungskanal des Ventilators in einer bestimmten Einbausituation einer Anlage (A) zu bestimmen und bei einer Abweichung von einem Soll-Volumenstrom $\Delta V_{Soll}/\Delta t$ die Drehzahl n des Motors (M) entsprechend über den Drehzahlregler (D) anzupassen,

**dadurch gekennzeichnet, dass** neben der aus dem Simulationsmodell ermittelten Druckdifferenz $\Delta p$ ferner ein Korrekturfaktor $\zeta_a$ für Strömungsverluste $\Delta V_i/\Delta t$ bei der Volumenstrombestimmung des Volumenstroms $\Delta V/\Delta t$ verwendet wird, mit dem eine Abweichung der tatsächlichen Strömungsverhältnisse gegenüber der idealen Ventilatorkennlinie ohne Berücksichtigung von Strömungsverlusten des Ventilators korrigiert wird.

2. Volumenstromerfassungsvorrichtung nach Anspruch 1, **dadurch gekennzeichnet, dass** das Simulationsmodell (SM) für die Ermittlung der Druckdifferenz $\Delta p$ und des Volumenstroms $\Delta V/\Delta t$ ein Laufradmodell (LM) umfasst, bei dem wenigstens die Kreisfrequenz $\omega$ des Motors (M) als Eingangsgröße verendet wird.

3. Volumenstromerfassungsvorrichtung nach Anspruch 1, **dadurch gekennzeichnet, dass** der Korrekturfaktor K als ein Druckverlustbeiwert $\zeta_a$ die Verluste aus Reibungsverlusten, Stoßverlusten und Spaltverlusten im Strömungskanal am Ort x berücksichtigt.

4. Volumenstromerfassungsvorrichtung nach Anspruch 1 oder 3, **dadurch gekennzeichnet, dass** der Korrekturfaktor K als eine Funktion des Druckverlustbeiwertes $\zeta_a$ ($\Delta V/\Delta t$, n) abhängig vom Volumenstrom $\Delta V/\Delta t$ und der Drehzahl n auf Basis einer mit dem Ventilator oder einem Ventilator identischer Bauart durchgeführten Referenzmessung aus dem Quotienten aus der gemessenen Druckdifferenz zur berechneten Druckdifferenz wie folgt bestimmt wurde:

$$K = K(\zeta_a)= (\Delta p_{Soll} / \Delta p_{Mess}).$$

5. Volumenstromerfassungsvorrichtung nach einem der Ansprüche 1, 3 oder 4, **dadurch gekennzeichnet, dass** das Laufradmodell so ausgelegt ist, dass der Gesamt-Volumenstrom einschließlich der Verluste wie folgt ermittelt wird:

$$\Delta V_{Ges}/\Delta t = \Delta V_{Verlust}/\Delta t + \Delta V/\Delta t.$$

6. Lufttechnische Anlage (A) mit einer Volumenstromerfassungsvorrichtung (1) gemäß einem der vorhergehenden Ansprüchen 1 bis 5.

7. Verfahren zur Volumenstromerfassung eines Ventilators mit einem Motor (M) umfassend einen Drehzahlregler (D) und wenigstens einen Mikrocontroller (10), mit den folgenden Schritten:

   a. an einem Eingang des Mikrocontrollers (10) wird die Drehzahl n des Motors (M) als Eingangsgröße in Form eines digitalen Signals eingegeben

   b. es wird mittels eines in einem Speicher des Mikrocontrollers (2) hinterlegten Simulationsmodells (SM) die vom Laufrad bei dieser Drehzahl erzeugte Druckdifferenz $\Delta p$ und der Volumenstrom $\Delta V/\Delta t$ an einem Ort x in einem Strömungskanal des Ventilators in einer bestimmten Einbausituation einer Anlage (A) bestimmt

   c. bei einer Abweichung des ermittelten Ist-Volumenstroms $\Delta V/\Delta t$ von einem Soll-Volumenstrom $\Delta V_{Soll}/\Delta t$ wird die Drehzahl n des Motors entsprechend über den Drehzahlregler angepasst,

**dadurch gekennzeichnet, dass** bei der Ermittlung des Volumenstroms $\Delta V/\Delta t$ ein Korrekturwert K berücksichtigt wird, der zu einem Druckverlustbeiwert $\zeta_a$ ($\Delta V/\Delta t$, n) abhängig vom Volumenstrom $\Delta V/\Delta t$ und der Drehzahl n korrespondiert und auf Basis einer mit dem Ventilator oder einem Ventilator identischer Bauart durchgeführten Referenzmessung aus dem Quotienten aus der gemessenen Druckdifferenz zur berechneten Druckdifferenz wie folgt bestimmt wurde:

$$K = K(\zeta_a)= (\Delta p_{Soll} / \Delta p_{Mess}).$$

8. Verfahren nach Anspruch 7, **dadurch gekennzeichnet, dass** die angepasste Drehzahl n erneut als Eingangsgröße bei der Durchführung der Schritte a) bis c) verwendet wird, solange, bis die Abweichung des Volumenstroms $\Delta V/\Delta t$ geringer ist, als ein vorgegebener zulässiger Abweichungswert.

**Claims**

1. A volume flow rate detection device of a fan comprising a motor (M) having a speed controller (D) and at least one microcontroller (10), wherein the speed n of the motor (M) is input at an input of the microcontroller as an input variable in the form of a digital signal, in order to determine the pressure difference $\Delta p$ generated by the impeller wheel at this speed and the volume flow rate $\Delta V/\Delta t$ at a location x in a flow channel of the fan in a specific installation situation of a system (A), by means of a simulation model (SM) stored in a memory of the microcontroller (10), and in order to adjust the speed n of the motor (M) accordingly by means of the speed controller (D) in the event of a deviation from a setpoint volume flow rate $\Delta V_{Setpoint}/\Delta t$,

**characterized in that** in addition to the pressure difference $\Delta p$ determined from the simulation model, a correction factor $\zeta_a$ for flow losses $\Delta V/\Delta t$ is moreover

used in the volume flow rate determination of the volume flow rate $\Delta V/\Delta t$, by means of which a deviation of the actual flow conditions with respect to the ideal fan characteristic curve is corrected without taking into account flow losses of the fan.

2. The volume flow rate detection device according to claim 1, **characterized in that** the simulation model (SM) for the determination of the pressure difference $\Delta p$ and of the volume flow rate $\Delta V/\Delta t$ comprises an impeller model (LM), wherein at least the angular frequency $\omega$ of the motor (M) is used as input variable.

3. The volume flow rate detection device according to claim 1, **characterized in that** the correction factor K as a pressure loss coefficient $\zeta_a$ takes into account the losses from friction losses, impact losses and gap losses in the flow channel at the location x.

4. The volume flow rate detection device according to claim 1 or 3, **characterized in that** correction factor K, as a function of the pressure loss coefficient $\zeta_a$ ($\Delta V/\Delta t$, n), has been determined as a function of the volume flow rate $\Delta V/\Delta t$ and the speed n on the basis of a reference measurement carried out with the fan or with a fan of identical design from the quotient of the measured pressure difference with respect to the calculated pressure difference as follows:

$$K = K(\zeta_a) = (\Delta p_{Setpoint} / \Delta p_{Measurement}).$$

5. The volume flow rate detection device according to any one of claims 1, 3 or 4, **characterized in that** the impeller wheel model is designed so that the total volume flow rate including the losses is determined as follows:

$$\Delta V_{Total}/\Delta t = \Delta V_{Loss}/\Delta t + \Delta V/\Delta t.$$

6. A ventilation system (A) with a volume flow rate detection device (1) according to any one of the preceding claims 1 to 5.

7. A method for the detection of the volume flow rate of a fan comprising a motor (M) having a speed controller (D) and at least one microcontroller (10), with the following steps:

   a. the speed n of the motor (10) is input at an input of the microcontroller (10) as input variable in the form of a digital signal
   b. by means of a simulation model (SM) stored in a memory of the microcontroller (2), the pressure difference $\Delta p$ generated by the impeller wheel at this speed and the volume flow rate

$\Delta V/\Delta t$ at a location x in a flow channel of the fan in a specific installation situation of a system (A) are determined, and
   c. in the event of a deviation of the determined actual volume flow rate $\Delta V/\Delta t$ from a setpoint volume flow rate $\Delta V_{Setpoint}/\Delta t$, the speed n of the motor is accordingly adjusted by means of the speed controller,

   **characterized in that** in the determination of the volume flow rate $\Delta V/\Delta t$, a correction value K which corresponds to a pressure loss coefficient $\zeta_a$ ($\Delta V/\Delta t$, n) as a function of the volume flow rate $\Delta V/\Delta t$ and the speed n is taken into account and has been determined on the basis of a reference measurement carried out with the fan or with a fan of identical design from the quotient of the measured pressure difference with respect to the calculated pressure difference as follows:

$$K = K(\zeta_a) = (\Delta p_{Setpoint} / \Delta p_{Measurement}).$$

8. The method according to claim 7, **characterized in that** the adjusted speed n is used again as input variable in the performance of steps a) to c), until the deviation of the volume flow rate $\Delta V/\Delta t$ is less than a specified acceptable deviation value.

## Revendications

1. Dispositif de détection de débit volumique d'un ventilateur à moteur (M) comprenant un variateur de vitesse (D) et au moins un microcontrôleur (10), dans lequel, au niveau d'une entrée du microcontrôleur, la vitesse n du moteur (M) est entrée en tant que grandeur d'entrée sous la forme d'un signal numérique, afin d'utiliser un modèle de simulation (SM) stocké dans une mémoire du microcontrôleur (10) pour déterminer la différence de pression $\Delta p$ générée par la roue à cette vitesse et le débit volumique $\Delta V/\Delta t$ en un emplacement x dans un canal d'écoulement du ventilateur dans une situation d'installation spécifique d'un système (A) et, en cas d'écart par rapport à un débit volumique cible $\Delta V_{consigne}/\Delta t$, ajuster en conséquence la vitesse n du moteur (M) via le régulateur de vitesse (D), **caractérisé en ce que**, en plus de la différence de pression $\Delta p$ déterminée à partir du modèle de simulation, un facteur de correction $\zeta a$ pour les pertes de débit $\Delta V_i/\Delta t$ est également utilisé lors de la détermination du débit volumique $\Delta V/\Delta t$, facteur avec lequel un écart des conditions de débit réelles par rapport à la courbe caractéristique idéale du ventilateur est corrigé sans tenir compte des pertes de débit du ventilateur.

**2.** Dispositif de détection de débit volumique selon la revendication 1, **caractérisé en ce que** le modèle de simulation (SM) pour déterminer la différence de pression $\Delta p$ et le débit $\Delta V/\Delta t$ comprend un modèle de roue (LM), dans lequel au moins la fréquence angulaire $\omega$ du moteur (M) est utilisée comme grandeur d'entrée.

**3.** Dispositif de détection de débit volumique selon la revendication 1, **caractérisé en ce que** le facteur de correction K en tant que coefficient de perte de pression $\zeta_a$ prend en compte les pertes dues aux pertes par frottement, aux pertes par choc et aux pertes par interstice dans le canal d'écoulement à l'endroit x.

**4.** Dispositif de détection de débit volumique selon la revendication 1 ou 3, **caractérisé en ce que** le facteur de correction K, en fonction du coefficient de perte de pression $\zeta_a$ ($\Delta V/\Delta t$, n) en fonction du débit volumique $\Delta V/\Delta t$ et de la vitesse n sur la base d'une mesure de référence effectuée avec le ventilateur ou un ventilateur de conception identique, a été déterminé à partir du quotient à partir de la différence de pression mesurée pour la différence de pression calculée comme suit :

$$K = K(\zeta_a) = (\Delta p_{consigne}/\Delta p_{mesure}).$$

**5.** Dispositif de détection de débit volumique selon l'une des revendications 1, 3 ou 4, **caractérisé en ce que** le modèle de roue est conçu de sorte que le débit volumique total, y compris les pertes, est déterminé comme suit :

$$\Delta V_{total}/\Delta t = \Delta V_{perte}/\Delta t + \Delta V/\Delta t.$$

**6.** Système de ventilation (A) avec un dispositif de détection de débit volumique (1) selon l'une des revendications précédentes 1 à 5.

**7.** Procédé de mesure du débit volumique d'un ventilateur à moteur (M) comprenant un variateur de vitesse (D) et au moins un microcontrôleur (10), avec les étapes suivantes :

    a. la vitesse n du moteur (M) est entrée comme grandeur d'entrée sous la forme d'un signal numérique à une entrée du microcontrôleur (10)
    b. au moyen d'un modèle de simulation (SM) stocké dans une mémoire du microcontrôleur (2), la différence de pression $\Delta p$ générée par la roue à cette vitesse et le débit volumique $\Delta V/\Delta t$ en un emplacement x dans un canal d'écoulement du ventilateur dans une situation d'installation spécifique d'un système (A) sont déterminés

    c. si le débit volumique réel déterminé $\Delta V/\Delta t$ s'écarte d'un débit volumique de consigne $\Delta V_{consigne}/\Delta t$, la vitesse n du moteur est ajustée en conséquence via le régulateur de vitesse,

**caractérisé en ce que**, lors de la détermination du débit volumique $\Delta V/\Delta t$, une valeur de correction K est prise en compte, qui correspond à un coefficient de perte de pression $\zeta_a$ ($\Delta V/\Delta t$, n) en fonction du débit volumique $\Delta V/\Delta t$ et de la vitesse n et a été déterminé sur la base d'une mesure de référence effectuée avec le ventilateur ou un ventilateur de conception identique à partir du quotient à partir de la différence de pression mesurée pour la différence de pression calculée comme suit :

$$K = K(\zeta_a) = (\Delta p_{consigne}/\Delta p_{mesure})$$

**8.** Procédé selon la revendication 7, **caractérisé en ce que** la vitesse adaptée n est à nouveau utilisée comme grandeur d'entrée lors de l'exécution des étapes a) à c) jusqu'à ce que l'écart du débit volumique $\Delta V/\Delta t$ soit inférieur à une valeur d'écart admissible prédéterminée.

SM

D — $U_{ZK}$ → M — $\omega$ → LM — $\Delta p$ → A

$n_{SOLL}$ → D ← $\omega$ — M ← M — LM ← dV/dt — A

$\Delta p$

dV/dt

## Fig. 1

Fig. 2

Fig. 3

$\dot{V}$ 1

Volumenstrom

To Workspace

$Volumenstrom_{glo}$

2

$v_m$

s zu h

3600

$u^2$

$1/(A_a^2)$

mittlere Geschwindigkeit

$\frac{1}{s}$

Integrator

$1/L_a$

rho/2

Dichte

$\times$

Druckdifferenz

To Workspace

$Druckdifferenz_{glo}$

1

$\Delta p$

2

$\zeta_a$

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2012171050 A1

- US 2015037169 A1